(19) Europäisches Patentamt
European Patent Office
Office européen des brevets

(11) Veröffentlichungsnummer: **0 093 910**
**B1**

(12) # EUROPÄISCHE PATENTSCHRIFT

(45) Veröffentlichungstag der Patentschrift: **13.08.86**

(51) Int. Cl.⁴: **C 08 F 6/10**, C 08 F 6/16, C 08 F 6/24, C 08 F 6/28

(21) Anmeldenummer: **83103898.9**

(22) Anmeldetag: **21.04.83**

(54) **Verfahren zur Behandlung von (Co)Polymerisaten zur Entfernung von Restmonomeren.**

(30) Priorität: **29.04.82 DE 3215911**

(43) Veröffentlichungstag der Anmeldung: **16.11.83 Patentblatt 83/46**

(45) Bekanntmachung des Hinweises auf die Patenterteilung: **13.08.86 Patentblatt 86/33**

(84) Benannte Vertragsstaaten: **BE DE FR GB NL**

(56) Entgegenhaltungen: **DE-A-1 569 021**

(73) Patentinhaber: **BASF Aktiengesellschaft, Carl-Bosch- Strasse 38, D-6700 Ludwigshafen (DE)**

(72) Erfinder: **Reffert, Rudi Wilhelm, Berliner Strasse 18, D-6711 Beindersheim (DE)**
Erfinder: **Hambrecht, Juergen, Dr., Werderstrasse 30, D-6900 Heidelberg (DE)**
Erfinder: **Jung, Rudolf H., Dr., Wachenheimer Strasse 6D, D-6520 Worms (DE)**
Erfinder: **Echte, Adolf, Dr., Leuschnerstrasse 42, D-6700 Ludwigshafen (DE)**

**EP 0 093 910 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Thermoplastische Polymerisate, wie Polystyrol, schlagfestes Polystyrol (HIPS), Styrol-Acrylnitril-Copolymerisate (SAN), Acrylnitril-/Butadien/Styrol-(ABS)Polymerisate, Polymethylmethacrylat, Styrol-Maleinsäureanhydrid-(SMSA)-Copolymerisate, Polyamide, Acrylnitrilpolymerisate vom Barriere-Typ (Ullmanns Encyclopädie der technischen Chemie, Band 19, Seite 275, Verlag Chemie, Weinheim, 1980) werden in gesonderten Entgasungsschritten von noch nicht umgesetzten Monomeren und Hilfsstoffen, wie Lösungsmitteln, befreit. Dabei ist es in der Regel gleichgültig, nach welchen Polymerisationsverfahren die Polymerisate erzeugt wurden. Bei allen herkömmlichen Verfahren, wie Masse-, Lösungs-, Masse/Suspensions-, Emulsions- oder Fällungspolymerisation müssen die noch enthaltenen Restmonomeren entfernt werden.

Hierzu werden sehr unterschiedliche Wege eingeschlagen. Die übliche Methode ist die Entgasung über einstufige oder mehrstufige Entgasungsaggregate, wie sie z.B. in den Patentschriften US 2 727 884, US 2 941 935 beschreiben werden. Die mit Hilfe dieser Verfahren hergestellten thermoplastischen Harze enthalten jedoch häufig noch Restmonomerenmengen, die ihre Anwendung z.B. im Verpackungssektor für Lebensmittel oder in Artikeln, die einem Langzeitkontakt mit Lebensmitteln ausgesetzt sind, nicht zulassen.

Es wurde deshalb schon vorgeschlagen, die Restmonomeren in diesen Polymerisaten durch Elektronenbestrahlung zu entfernen. Der Restmonomer-Gehalt wird dabei vermindert, gleichzeitig tritt jedoch eine merkliche Gelbfärbung und eine partielle Vernetzung der Polymerisate ein. Der Investitionsaufwand für die Anlage und der Energieaufwand für die Betreibung der Anlage liegen außerdem sehr hoch.

Es ist auch schon vorgeschlagen worden, Hilfsmittel zu verwenden, um die Restmonomeren zu entfernen.

Zum Stand der Technik nennen wir:

(1) US—PS 4 124 658
(2) US—PS 4 215 085
(3) US—PS 4 215 024 und
(4) US—PS 4 228 119.

In (1) wird die chemische Nachentgasung von Styrol-Polymeren mit Sulfonsäurehydraziden beschrieben. Dieses Verfahren hat den Nachteil, daß die Restmonomerenentfernung nicht ausreichend ist.

In (2), (3) und (4) werden Umsetzungsprodukte von olefinischen Alkoholen mit Fettsäuren, Cyanursäure und Fettsäurealdehyden bzw. ungesättigte Fettsäuren, wie Ölsäure bzw. Glyceride ungesättigter Fettsäuren, wie Linolsäure, Ölsäure oder Leinsaatöl zur chemischen Nachentgasung, insbesondere für die Entfernung von monomerem Acrylnitril durch Abfangreaktionen beschrieben. Diese Verfahren haben den Nachteil, daß die resultierenden Polymere eine erhebliche Gelbfärbung aufweisen und die Restmonomerenentfernung teilweise nicht ausreichend ist.

Aufgabe der vorliegenden Erfindung war es deshalb, Polymere mit einem verminderten Restmonomerengehalt herzustellen, ohne daß dafür zusätzliche Entgasungsaggregate notwendig sind. Das Verfahren sollte eine Entgasung bis zu so niedrigen Restmonomerengehalten erlauben, daß die Polymeren ohne Kontaminationsrisiken für Lebensmittelverpackungen eingesetzt werden können. Durch die Entfernung der Restmonomeren sollten außerdem die Eigenschaften der Polymerisate nicht verändert werden.

Es wurde nun gefunden, daß dies der Fall ist bei einem Verfahren gemäß Patentanspruch 1.

Nachstehend wird das erfindungsgemäße Verfahren und der Aufbau der (Co)Polymerisate beschrieben:

Das erfindungsgemäße Verfahren ist anwendbar für alle Polymerisate oder (Co)Polymerisate, die mindestens aus einem Monomeren aus der Gruppe

a) von Styrol, p-Methylstyrol und α-Methylstyrol und

b) Estern der Acryl- und Methacrylsäure von Alkoholen mit 1 bis 10 C-Atomen, des Acrylnitrils und des Maleinsäureanhydrids

aufgebaut sind und eine Glastemperatur im Bereich von 50—150°C aufweisen.

Als Polymerisate können praktisch alle thermoplastischen Harze und modifizierten Polymeren eingesetzt werden die vinylgruppenhaltige Monomere a) und/oder b) enthalten und deren Restmonomerengehalt gesenkt werden soll. Es können aber auch relative niedermolekulare Polymere, gleichgültig ob sie in Substanz, Lösung oder als Dispersion vorliegen, mit Hilfe der Verbindungen der Formel I nachentgast werden. Besondere Anwendung findet das Verfahren bei modifiziertem und unmodifiziertem Polystyrol, bei Styrolcopolymeren, wie SAN, S-MSA und S-MMA-Copolymeren bei ABS-, ASA-, ACS- und MBS-Harzen, schlagzähmodifizierten S-MSA-Copolymeren, schlagzähmodifizierten Polymethylmethacrylaten, Polyamiden hochacrylnitrilhaltigen, Barrierekunststoffen und Acrylnitrilpolymerisaten.

Besonders bevorzugt zur Entfernung von Restmonomeren sind thermoplastische, modifizierte oder unmodifizierte Styrolpolymerisate, Styrolcopolymerisate, Acrylnitrilpolymerisate, Acrylnitrilcopolymerisate, Methacrylsäureesterpolymerisate, Methacrylsäureestercopolymerisate, Acrylsäureesterpolymerisate und Acrylsäureestercopolymerisate.

Das erfindungsgemäße Verfahren wird bei Temperaturen overhalb der Glastemperatur des

(Co)Polymerisates durchgeführt. Die Umsetzung erfolgt in Gegenwart von cyclischen Verbindungen der Formel I (Diels Alder Addukte) als Hilfsmittel. Die genannten Verbindungen der Formel I sollen so gewählt werden, daß deren Zersetzungstemperatur 50 bis 200°C oberhalb der Glastemperatur der zu entgasenden (Co)Polymerisate liegt. Das bedeutet, daß die Zersetzungstemperatur der Verbindungen der Formel I im Bereich von 100 bis 350°C, vorzugweise von 100 bis 300°C, liegen soll.

Die Verbindungen der Formel I werden zweckmäßig in Mengen von 0,5 bis 200 Mol, bezogen auf 1 mol vinylgruppenhaltiges Restmonomer a) und/oder b), eingesetzt. In der bevorzugten Ausführungsform werden 1 bis 50 Mol, pro Mol Restmonomer, verwendet.

Die Vermischung von (Co)Polymerisat und Hilfsmittel wird bevorzugt in einem Extruder — zweckmäßig Einwellen- oder Zweiwellenextruder — durchgeführt. Es können aber auch andere Mischaggregate, die eine intensive Durchmischung erlauben, eingesetzt werden, wie statische Mischer mit Kenics- oder Sulzer-Mischelementen sowie dynamisch arbeitende Stiftsmischer.

Die Verweilzeit beim Vermischen der Polymeren und Verbindungen der Formel I kann zweckmäßig zwischen 0,2 und 20 Minuten variieren, je nach Güte der Durchmischung in den jeweiligen Mischaggregaten. Beim Einsatz von Extrudern betragen vorteilhaft die Verweilzeiten zwischen 20 bis 180 Sekunden, wobei die Schmelzviskosität der Polymeren die notwendige Durchmischzeit bestimmt. Durch Variation der Temperatur kann das erforderliche Verweilzeitspektrum eingestellt werden.

Wesentlich für die Durchführung des erfindungsgemäßen Verfahrens ist, daß wenigstens eine mindestens bicyclisch aufgebaute Verdingung der allgemeinen Formel I

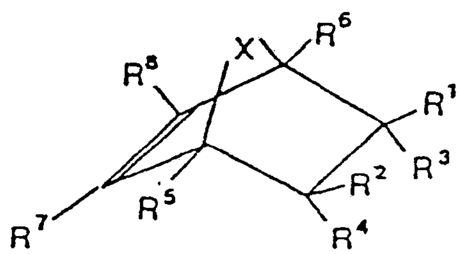

angewendet wird.

In der genannten Formel stehen:

X für eine substituierte oder unsubstituierte Methylen-, Ethylen-, 1,1-Ethenyl-, 1,2- Ethenyl-, Carbonyl-, Azo-, Amino-, Ether- oder Thioether-Gruppierung, deren Substituenten Alkyl, Alkenyl, Cycloalkyl-, Aryl-, Carboxyl-, Carboxyalkyl-, Ether- oder Thioether-Gruppen sein können,

$R^1$, $R^2$, $R^3$ und $R^4$ für Wasserstoffatome, Alkyl-, Alkenyl-, Cycloalkyl-, Aryl-, Carboxyalkyl-, oder Nitrilgruppen,

$R^5$ und $R^6$ für Wasserstoffatome, Alkyl- oder Carboxyalkyl-Gruppierungen und

$R^7$ und $R^8$ für Wasserstoffatome, Alkyl-, Alkenyl-, Aryl-, Carboxyalkyl-, Carboxyl- oder Nitrilgruppen.

Als Verbindungen gemäß Formel I werden besonder bevorzugt Diels-Alder-Addukte, die sich von Tricyclo-[5.2.1.0$^{2,6}$]-decadien-(3,8); von Tricyclo-[6.2.2.0$^{2,7}$]-dodecadien-(3,8); von Bicyclo-[2.2.1]-hepten-(2); Bicyclo-[2.2.2]-octen (2); Bicyclo-[2.2.2]-octadien-(2,5) ableiten oder diesen Produkten entsprechen. Verbindungen dieser Art sind das Tricyclo[5.2.1.0$^{2,6}$]-decadien-(3,8)-on-5; 4,9-Bis-carboxymethyl-tricyclo-[5.2.1.0$^{2,6}$]-decadien-(3,8); 4,9-Bis-carbonitril-tricyclo-[5.2.1.0$^{2,6}$]-decadien-(3,8); 1,4-Bis-carboxymethyl-tricyclo-[5.2.1.0$^{2,6}$]-decadien-(3,8);

1,7,7,-Trimethylbicyclo-[2.2.1]-hepten-(2), um nur einige wenige Beispiele zu Nennen, ohne damit eine Einschränkung der Erfindung vorzunehmen. Die Herstellung derartiger Diels-Alder Produkte ist an sich bekannt (vgl. DE—AS 15 69 021 under DE—AS 15 69 032).

Den Zeitpunkt der Durchführung des erfindungsgemäßen Verfahrens kann der Fachmann anhand der örtlichen Gegebenheiten und des angewendeten Polymerisationsverfahrens ohne weiteres festlegen. So kann das erfindungsgemäße Verfahren unmittelbar im Anschluß an die Polymerisation oder nach vorheriger Verdampfung des größten Teils des Lösungsmittels und nicht umgesetzter Monomerer erfolgen. Das erfindungsgemäße Verfahren kann auch nach der Trocknung der (Co)Polymerisate gegebenenfalls zusammen mit der Konfektionierung oder vor dieser durchgeführt werden.

Die Durchmischung von (Co)Polymerisat und Verbindung der Formel I wird bei Temperaturen durchgeführt, die einerseits über der Glastemperatur des (Co)Polymerisates liegen und andererseits oberhalb des Zersetzungspunktes der cyclischen Verbindungen liegen. Bezüglich der Definition der Glastemperatur verweisen wir auf "Ullmanns Encyclopädie der technischen Chemie", Verlag Chemie Weinheim, Band 18, Seiten 594 und 595. Die Durchmischung kann drucklos oder unter Druck, kontinuierlich oder diskontinuierlich durchgeführt werden.

Im Vergleich zu den bekannten Verfahren liefert das erfindungsgemäße Verfahren (Co)Polymerisate mit weit geringerer Restmonomerenmenge. Daher sind diese für die Lebensmittelverpackung gut geeignet. Es findet eine Entfernung durch chemische Umsetzung der Restmonomeren statt. Mit Hilfe des

erfindungsgemäßen Verfahrens gelingt es, den Restmonomerengehalt von Polymeren drastisch abzusenken, ohne daß hierfür zusätzliche Entgasungsaggregate notwendig wären, und ohne daß hierbei die Polymerisate vergilben oder vernetzen.

Alle diese vorteilhaften Ergebnisse sind im Hinblick auf den Stand der Technik überraschend.

Die nach dem Verfahren der Erfindung erhältlichen entgasten Polymerisate sind wertvolle Ausgangsstoffe für zahlreiche Kunststoffanwendungen, insbesondere für Kunststoffe mit Lebensmittelberührung, z.B. in der Verpackung.

Die in den folgenden Beispielen angegebenen Teile bedeuten Gewichtsteile.

Beispiel 1

Folgende Stoffe werden auf einem Zweiwellenextruder intensiv miteinander vermischt und dan ausgetragen:

Styrol-Acrylnitril-Copolymerisat; $\overline{M}_w$ (mittleres Molekulargewicht) = $1{,}4 . 10^5$; AN-Gehalt 25%. Restmonomeren-Gehalt 2340 ppm Styrol, 68 ppm Acrylnitril; Tricyclo-[5.2.1.$0^{2,6}$]-decadien-(3,8) 1% bezogen auf das SAN-Polymere.

Die Vermischung wird bei 250°C und Verweilzeit von 4 Minuten vorgenommen. Nach der Extrusion hat das SAN-Copolymere einen auf 1640 ppm Styrol und 5 ppm Acrylnitril verminderten Restmonomerengehalt. Das SAN-Copolymere ist nicht vergilbt und vollständig löslich. Die mechanischen Eigenschaften entsprechen dem Ausgangsmaterial.

Beispiel 2

Folgende Stoffe werden auf einem Zweiwellenextruder intensiv miteinander vermischt und dann ausgetragen:

Styrol-Acrylnitril-Copolymerisat; $\overline{M}_w$ (mittleres Molekulargewicht) = $1{,}2 . 10^5$; AN-Gehalt 35%. Restmonomeren-Gehalt 4250 ppm Styrol, 500 ppm Acrylnitril; Tricyclo-[5.2.1.$0^{2,6}$]-decadien-(3,8) 0,5%, bezogen auf das SAN-Polymere.

Die Vermischung wird bei 260°C und Verweilzeit von 4 Minuten vorgenommen.

Nach der Extrusion hat das SAN-Copolymere einen auf 2700 ppm Styrol und 87 ppm Acrylnitril verminderten Restmonomerengehalt. Das SAN-Copolymere ist nicht vergilbt und vollkommen löslich. Die mechanischen Eigenschaften entsprechen dem Ausgangsmaterial.

Beispiel 3

Es wird das in Beispiel 2 beschriebene Polymerisat mit 1,0% Tricyclo-[5.2.1.$0^{2,6}$)-decadien-(3,8) bei entsprechenden Bedingungen (T = 260°C, Verweilzeit 4 Minuten) eingesetzt. Nach der Extrusion findet man noch 1800 ppm Styrol und 10 ppm Acrylnitril. Die anderen Eigenschaften der SAN-Copolymeren sind wiederum nicht verändert.

Beispiel 4

Auf einem Einwellenextruder werden bei 240°C und Verweilzeit von 3 Minuten

— ASA-Polymerisat: 17,5 Gew.% Polybutylacrylat, bezogen auf das ASA-Polymerisat, als Weichkomponente, SAN-Copolymerisat mit 25 Gew.% AN, bezogen auf das SAN-Copolymerisat, und $\overline{M}_w = 1.3 . 10^5$ als Hartkomponente und einem Restmonomerengehalt von 1900 ppm Styrol und 45 ppm Acrylnitril

— 0,5% Tricyclo-[5.2.1.$0^{2,6}$]-decadien-(3,8)

konfektioniert. Das Polymerisat enthält noch 860 ppm Styrol und 5 ppm Acrylnitril. Die mechanischen Eigenschaften sind unverändert.

Beispiel 5

Auf einem Einwellenextruder werden bei 230°C und Verweilzeit von 4 Minuten

— SAN-Copolymerisat mit 70% Acrylnitril, $\overline{M}_w = 1{,}4 . 10^5$; Restmonomerengehalt von 120 ppm Acrylnitril und 190 ppm Styrol.

— 0,8% Tricyclo-[5.2.1.$0^{2,6}$]-decadien-(3,8)

konfektioniert. Der Barriere-Kunststoff hat nach der Konfektionierung einen Restmonomerengehalt von 5 ppm Acrylnitril und 100 ppm Styrol.

Beispiel 6

Auf einem Zweiwellenextruder wurden bei 210°C und Verweilzeit von 4 Minuten

— Styrol-Methylmethacrylate-Copolymerisat, MMA-Gehalt 50%; $\overline{M}_w = 1{,}2 . 10^5$; Restmonomerengehalt von 1900 ppm Styrol, 820 ppm Methylmethacrylat

— 1,0% Tricyclo-[5.2.1.$0^{2,6}$]-decadien-(3,8)

konfektioniert. Das Copolymerisat enthielt noch 1840 ppm Styrol und 45 ppm Methylmethacrylat.

Beispiel 7

Das in Beispiel 1 beschriebene Polymerisat wird bei 280°C und einer Verweilzeit von 2 Minuten mit 1% Tricylo-[6.2.2.$0^{2,7}$]-dodecadien-(3,9) umgesetzt. Nach der Extrusion findet man noch 1760 ppm Styrol und

10 ppm Acrylnitril. Die anderen Eigenschaften der SAN-Copolymeren sind nicht verändert.

Beispiel 8

Das in Beispiel 2 beschriebene Polymerisat wird bei 230°C und einer Verweilzeit von 5 Minuten mit 1% 4,9-Bis-carboxymethyl-tricyclo-[5.2.1.0.$^{2,6}$]-decadien-(3,8) umgesetzt. Das resultierende Polymerisat anthält noch 1400 ppm Styrol und 22 ppm Acrylnitril. Das Polymerisat ist ansonsten unverändert.

Beispiel 9

Das in Beispiel 2 beschriebene Polymerisat wird bei 240°C und einer Verweilzeit von 6 Minuten mit 1% 1,7,7-Trimethylbicyclo-[2.2.1]-hepten-(2) umgesetzt. Die Restmonomerenwerte des SAN-Polymerisats liegen daraufhin bei 2800 ppm Styrol und 56 ppm Acrylnitril. Das Polymerisat ist ansonsten unverändert.

**Patentansprüche**

1. Verfahren zur Behandlung von (Co)Polymerisaten mit einer Glastemperatur von 50—150°C, die aufgebaut sind aus mindestens einem Monomeren aus der Gruppe

a) von Styrol, p-Methylstyrol und α-Methylstyrol und

b) Estern der (Meth)-Acrylsäure von Alkoholen mit 1 bis 10 C-Atomen, des Acrylnitrils und des Maleinsäureanhydrids

und die noch mindestens einen Monomerenbaustein a) oder b) oder a) und b) als nicht umgesetztes Restmonomer enthalten, bei Temperaturen von 100—350°C mit mindestens einem dem (Co)Polymerisat zugesetzten Hilfsmittel, dessen Zersetzungstemperatur 50 bis 200°C oberhalb der Glastemperatur des zu behandelnden (Co)Polymerisats liegt, und das in einer Menge von 0,1 bis 200 Mol, bezogen auf 1 Mol Restmonomer a) oder b) oder a) und b) angewendent wird, dadurch gekennzeichnet, daß man als Hilfsmittel mindestens eine Verbindung verwendent, die mindestens bicyclisch aufgebaut ist und die durch die allgemeine Formel I

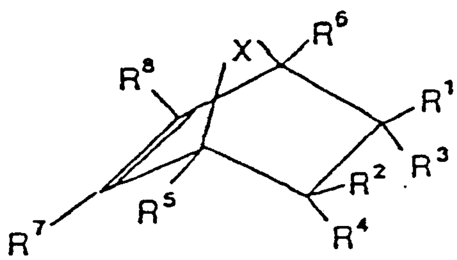

dargestellt werden kann, in der stehen:

X für eine substituierte oder unsubstituierte Methylen-, Ethylen-, 1,1-Ethenyl-, 1,2-Ethenyl-, Carbonyl-, Azo-, Amino-, Ether- oder Thioether-Gruppierung, deren Substituenten Alkyl, Alkenyl, Cycloalkyl-, Aryl-, Carboxyl-, Carboxyalkyl-, Ether- oder Thioether-Gruppen sein können,

$R^1$, $R^2$, $R^3$ und $R^4$ für Wasserstoffatome, Alkyl-, Alkenyl-, Cycloalkyl-, Aryl-, Carboxyalkyl- oder Nitrilgruppen,

$R^5$ und $R^6$ für Wasserstoffatome, Alkyl- oder Carboxyalkyl-Gruppierungen und

$R^7$ und $R^8$ für Wasserstoffatome, Alkyl-, Alkenyl-, Aryl-, Carboxyalkyl-, Carboxyl- oder Nitrilgruppen und daß die Behandlungstemperatur einerseits mindestens 50°C oberhalb der Glastemperatur des (Co)Polymerisats und andererseits Oberhalb des Zersetzungspunktes des zugesetzten Hilfsmittels eingestellt wird.

2. Verfahren nach Anspruch 1, dadurch gekennzeichnet, daß man die Behandlung von (Co)Polymerisat und Hilfsmittel bei Temperaturen von 200 bis 300°C in einem Mischaggregat bei einer Verweilzeit von (Co)Polymerisat und Hilfsmittel von 0,2 bis 20 Minuten vornimmt.

3. Verfahren nach Anspruch 2, dadurch gekennzeichnet, daß man als Hilfsmittel Tricyclo-[5.2.1.0$^{2,6}$]-decadien-(3,8) oder Tricyclo-[6.2.2.0$^{2,7}$]-dodecadien-(3,9) oder 4,9-Bis-carboxymethyl-tricyclo-[5.2.1.0-$^{2,6}$]-decadien-(3,8) oder 1,7,7,-Trimethyl-bicyclo-[2.2.1]-hepten-(2) verwendet.

4. Verfahren nach Anspruch 2, dadurch gekennzeichnet, daß man als (Co)Polymerisate S/AN-Polymerisate oder ASA-Polymerisate oder S/MMA-Polymerisate oder deren Gemische verwendet.

5. Verwendung von gemäß Anspruch 1 behandelten (Co)Polymerisaten zur Herstellung von Formteilen.

6. Formteile aus gemäß Anspruch 1 behandelten (Co)Polymerisaten.

**Revendications**

1. Procédé pour le traitement de (co)polymères d'une température de verre de 50 à 150°C, qui sont formés à partir d'au moins un monomère du groupe

a) du styrène, du p-méthylstyrène et de l' α-méthylstyrène et

b) d'esters de l'acide (méth)acrylique et d'alcools à 1—10 atomes de C, de l'acrylonitrile et de l'anhydride maléique,

et qui contiennent encore au moins un composant monomère a) ou b) ou a) et b) en tant que monomère résidual n'ayant pas réagi, à des températures de 100 à 340°C, avec au moins un agent auxiliaire, ajouté au (co)polymère, dont la température de décomposition se situe entre 50 et 200°C au-dessus de la température de verre du (co)polymère à traiter et qui est utilisé dans une proportion de 0,1 à 200 mol par rapport à 1 mol de monomère résidual a) ou b) ou a) et b), caractérisé en ce qu'on utilise, comme agent auxiliaire, au moins un composé qui a une structure au moins bicyclique et qui peut être représenté par la formule générale I

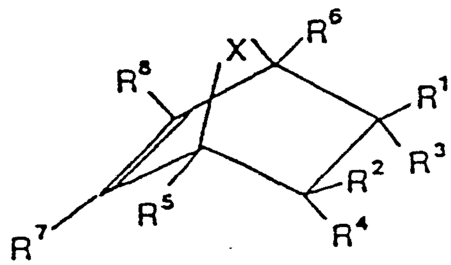

dans laquelle

X est mis pour un groupement méthylène, éthylène, 1,1-éthényle, 1,2-éthényle, carbonyle, azo, amino, éther ou thio-éther substitué ou non substitué, les substituants pouvant être des groupes alkyle, alcényle, cycloalkyle, aryle, carboxyle, carboxyalkyle, éther ou thio-éther,

$R^1$, $R^2$, $R^3$ et $R^4$ sont mis chacun pour un atome d'hydrogène, un groupe alkyle, alcényle, cycloalkyle, aryle, carboxyalkyle ou nitrile,

$R^5$ et $R^6$ sont mis chacun pour un atome d'hydrogène, un groupement alkyle our carboxyalkyle et

$R^7$ et $R^8$ sont mis chacun pour un atome d'hydrogène, un groupe alkyle, alcényle, aryle, carboxyalkyle, carboxyle ou nitrile,

et en ce que la température de traitement est réglée d'une part à au moins 50°C au-dessus de la température de verre du (co)-polymère et, d'autre part, au-dessus due point de décomposition de l'agent auxiliaire ajouté.

2. Procédé selon la revendication 1, caractérisé en ce qu'on procède au traitement du (co)polymère et de l'agent auxiliaire à des températures de 200 à 300°C dans un appareil mélangeur, avec une durée de séjour du (co)polymère et de l'agent auxiliaire de 0,2 à 20 mn.

3. Procédé selon la revendication 2, caractérisé en ce qu'on utilise comme agent auxiliaire le tricyclo-[5.2.1.$0^{2,6}$]-décadiène-(3,8), le tricyclo-[6.2.2.$0^{2,7}$]-dodécadiène-(3,9), le 4,9-bis-carboxyméthyl-tricyclo-[5.2.1.$0^{3,6}$]-décadiène-(3,8) ou le 1,7,7-triméthyl-bicyclo-[2.2.1]-heptène-(2).

4. Procédé selon la revendication 2, caractérisé en ce qu'on utilise comme (co)-polymères des polymères de S/AN, des polymères d'ASA, des polymères de S/MMA ou leurs mélanges.

5. Utilisation de (co)polymères traités selon la revendication 1 pour la fabrication de pièces moulées.

6. Pièces moulées fabriquées à partir de (co)polymères traités selon la revendication 1.

**Claims**

1. A method of treating a (co)polymer which has a glass temperature of 50 to 150°C and is composed of one or more monomers selected from the group consisting of

a) styrene, p-methylstyrene and α-methylstyrene, and

b) esters of acrylic or methacrylic acid with alcohols of 1 to 10 carbon atoms, acrylonitrile and maleic anhydride,

and furthermore contains one or more monomer components a) or b), or a) and b), as unreacted residual monomers, at a temperature of from 100 to 350°C, with at least one assistant which has been added to the (co)polymer, has a decomposition temperature of from 50 to 200°C above the glass temperature of the (co)polymer to be treated and is employed in an amount of from 0.1 to 200 moles per mole of residual monomer a) or b), or a) and b), wherein at least one compound which has an at least bicyclic structure and can be represented by the general formula I

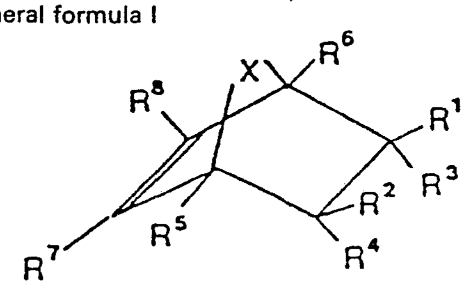

where

X is a methylene, ethylene, 1,1-ethenyl, 1,2-ethenyl, carbonyl, azo, amino, ether or thioether group which is unsubstituted or substituted by alkyl, alkenyl, cycloalkyl, aryl, carboxyl, carboxyalkyl, an ether group or a thioether group,

$R^1$, $R^2$, $R^3$ and $R^4$ are each hydrogen, alkyl, alkenyl, cycloalkyl, aryl, carboxyalkyl or nitrile,

$R^5$ and $R^6$ are each hydrogen, alkyl or carboxyalkyl, and

$R^7$ and $R^8$ are each hydrogen, alkyl, alkenyl, aryl, carboxyalkyl, carboxyl or nitrile, is used as assistant, and wherein the treatment temperature, on the one hand, is at least 50°C above the glass temperature of the (co)polymer and, on the other hand, is above the decomposition temperature of the added assistant.

2. A method as claimed in claim 1, wherein the treatment of the (co)polymer and assistant is carried out in a mixing unit at from 200 to 300°C for from 0.2 to 20 minutes.

3. A method as claimed in claim 2, wherein the assistant used is tricyclo[5.2.1.$0^{2,6}$]deca-3,8-diene or tricyclo-[6.2.2.$0^{2,7}$]dodeca-3,9-diene or 4,9-bis-carboxymethyl-tricyclo[5.2.1.$0^{2,6}$]deca-3,8-diene or 1,7,7,-trimethylbicyclo[2.2.1]hept-2-ene.

4. A method as claimed in claim 2, where in the (co)polymers used are SAN polymers, ASA polymers or SMMA polymers, or mixtures thereof.

5. The use of a (co)polymer treated in accordance with claim 1 for the production of molded parts.

6. Molded parts produced from a (co)polymer treated in accordance with claim 1.